# EUROPÄISCHE PATENTSCHRIFT

(11) **EP 4 111 154 B1**
(45) Veröffentlichungstag und Bekanntmachung des Hinweises auf die Patenterteilung: **05.06.2024**
(21) Anmeldenummer: 21701717.7
(22) Anmeldetag: 21.01.2021
(51) Int. Cl.: G01L 9/00

(54) **SENSOR UND VERFAHREN ZUR HERSTELLUNG EINES SENSORS**
SENSOR AND METHOD FOR PRODUCING A SENSOR
CAPTEUR ET PROCÉDÉ DE FABRICATION D'UN CAPTEUR

(30) Priorität: 27.02.2020 DE 102020105210
(43) Veröffentlichungstag der Anmeldung: 04.01.2023
(73) Patentinhaber: TDK Electronics AG, 81671 München (DE)
(72) Erfinder: MILKE, Bettina, 10783 Berlin (DE); PESCHKA, Andreas, 14552 Michendorf (DE)
(74) Vertreter: Epping - Hermann - Fischer
(86) Internationale Anmeldenummer: PCT/EP2021/051253
(87) Internationale Veröffentlichungsnummer: WO 2021/170314

(56) Entgegenhaltungen:
- EP-A1- 2 516 980
- EP-A2- 2 637 008
- DE-A1-102008 000 128
- US-A- 4 975 390
- US-A- 5 471 086
- US-A1- 2005 284 228
- US-A1- 2011 203 381
- US-A1- 2019 120 781
- US-B1- 6 510 742

## Beschreibung

Es wird ein Sensor angegeben. Darüber hinaus wird ein Verfahren zur Herstellung eines Sensors angegeben.

Die US 6,510,742 B1 offenbart einen Drucksensor, bei dem eine isolierende Siliziumdioxidschicht direkt auf einer Membran aufgebracht wird. Piezoresistiven Widerstände sind wiederum auf der Siliziumdioxidschicht aufgebracht.

Die EP 2637008 A2 offenbart einen sehr ähnlichen Aufbau, bei dem ein Dehnungselement eine Sensorschicht und eine Siliziumdioxidschicht aufweist. Letztere Schicht ist direkt auf der Membran aufgebracht. Der Aufbau der Sensorschicht wird jedoch nicht näher spezifiziert.

Bei einem in der US 5,471,086 A offenbarten Sensor werden eine Membran und ein Dehnungselement gezeigt. Piezoresistive Elemente sind an Stellen auf die Membran aufgebracht, an denen an Oberfläche der Membran ein isolierender Siliziumdioxidfilm ausgebildet ist.

Gemäß US 4,975,390 A sind piezoresistive Widerstandselemente von isolierendem Siliziumdioxid umgeben und in eine Plasma-Nitridschicht eingebettet. Das Dehnungselement ist hier nicht auf eine Membran sondern auf Trägerkörpern, die wiederum eine Membran stützen, aufgebracht. Zwischen der Plasma-Nitridschicht und den Trägerkörpern ist weiterhin eine Bonding-Schicht vorgesehen.

Die Dokumente US 2005/284228 A1, DE 10 2008 000128 A1 und US 2011/203381 A1 offenbaren weiterhin jeweils einen Drucksensor mit einer Membran, wobei das Dehnelement ein Siliziumsubstrat, eine Siliziumdioxidschicht und mehrere piezoresistive Widerstände aufweist.

Eine zu lösende Aufgabe besteht darin, einen Sensor anzugeben, der hohen Temperaturen standhält und auch in aggressiven Medien eingesetzt werden kann. Eine weitere zu lösende Aufgabe besteht darin, ein Verfahren zur Herstellung eines solchen Sensors anzugeben.

Diese Aufgaben werden unter anderem durch die Gegenstände der unabhängigen Patentansprüche gelöst. Vorteilhafte Ausgestaltungen und Weiterbildungen sind Gegenstand der abhängigen Patentansprüche und gehen weiterhin aus der nachfolgenden Beschreibung und den Figuren hervor.

Zunächst wird der Sensor angegeben. Bei dem Sensor handelt es sich insbesondere um einen Drucksensor für die Messung von Druck in Flüssigkeiten oder Gasen. Der Sensor kann beispielsweise in industriellen Anlagen, in Reaktoren oder in Kälte-/Klimaanlagen eingesetzt werden.

Gemäß zumindest einer Ausführungsform umfasst der Sensor einen Verformungskörper mit einer Membran zur Verformung bei Druckeinwirkung durch ein Medium. Der Verformungskörper kann ferner einen Trägerkörper aufweisen, mit dem die Membran mechanisch verbunden ist. Bevorzugt ist die Membran so auf dem Trägerkörper angeordnet, dass sie sich relativ zu dem Trägerkörper bewegen kann. Insbesondere ist die Membran dazu eingerichtet, relativ zum Trägerkörper zu schwingen und/oder relativ zu dem Trägerkörper gebogen zu werden.

Der Trägerkörper ist beispielsweise ringförmig oder rahmenförmig, sodass der Trägerkörper einen Hohlraum lateral umgibt. Die Membran ist derart auf dem Trägerkörper angeordnet, dass sie den Hohlraum in vertikaler Richtung, senkrecht zur lateralen Richtung, begrenzt und abschließt und dabei eine Deckfläche auf dem Trägerkörper bildet. Eine laterale Richtung bezeichnet hier und im Folgenden eine Richtung parallel zur Haupterstreckungsebene der Membran.

In dem nicht von dem Trägerkörper gestützten Bereich, also in dem an den Hohlraum grenzenden Bereich, kann die Membran schwingen oder sich verbiegen. Der Trägerkörper und die Membran können einstückig miteinander ausgebildet sein oder können voneinander verschiedene, aufeinander aufgebrachte Elemente sein. Im zweiten Fall können der Trägerkörper und die Membran aus unterschiedlichen oder gleichen Materialien bestehen.

Die Membran weist beispielsweise eine maximale und/oder mittlere Dicke, gemessen senkrecht zur Haupterstreckungsebene der Membran, zwischen einschließlich 50 µm und 1 mm, bevorzugt zwischen einschließlich 100 µm und 500 µm auf. Die Dicke der Membran hängt dabei auch von dem Material der Membran ab.

Gemäß zumindest einer Ausführungsform umfasst der Sensor ein auf die Membran aufgebrachtes und auf der Membran befestigtes Dehnungselement. Bei dem Dehnungselement handelt es sich beispielsweise um einen Halbleiterchip. Das Dehnungselement ist bevorzugt auf eine dem Trägerkörper abgewandte Seite der Membran aufgebracht. Besonders bevorzugt ist das Dehnungselement nur oder größtenteils in dem Bereich der Membran aufgebracht, der nicht von dem Trägerkörper gestützt ist, also in dem Bereich der frei schwingen kann. Wird die Membran infolge einer Druckeinwirkung durch ein Medium verbogen, so wird dann auch das Dehnungselement mit verbogen. Das Dehnungselement ist dazu eingerichtet, eine druckinduzierte Biegespannung des Verformungskörpers in ein elektrisches Signal umzuwandeln.

Das Dehnungselement basiert auf SOI-(Silicon-On-Insulator)-Technologie und weist ein Siliziumsubstrat, eine SiO₂-Schicht, z.B. auf dem Siliziumsubstrat, und mehrere piezoresistive Widerstände auf. Das Siliziumsubstrat kann in einer Ausführungsform aus dotiertem Silizium oder undotiertem Silizium bestehen.

Das Siliziumsubstrat erstreckt sich bevorzugt über die gesamte oder nahezu die gesamte laterale Ausdehnung des Dehnungselements. Insbesondere bildet das Siliziumsubstrat eine das Dehnungselement stützende, bevorzugt selbstragende Komponente des Dehnungselements. Das Siliziumsubstrat kann an quer zur Haupterstreckungsebene der Membran verlaufenden Seitenflächen Spuren eines Vereinzelungsprozesses, zum Beispiel Spuren eines physikalischen oder chemischen Materialabtrags, aufweisen. Diese Spuren resultieren beispielsweise aus einem Vereinzelungsprozess, bei dem das Dehnungselement aus einem Wafer herausgelöst wird.

Die piezoresistiven Widerstände sind bevorzugt aus dotiertem Silizium gebildet. Die piezoresistiven Widerstände sind beispielsweise durch metallische Leiterbahnen kontaktiert.

Die SiOg-Schicht liegt bevorzugt in einer Ebene zwischen den piezoresistiven Widerständen und dem Siliziumsubstrat. Das Siliziumsubstrat ist bevorzugt der Membran zugewandt und die piezoresistiven Widerstände der Membran abgewandt. Die piezoresistiven Widerstände sind beispielsweise durch die SiO₂-Schicht von dem Siliziumsubstrat elektrisch isoliert.

Das Dehnungselement umfasst beispielsweise zumindest zwei oder zumindest vier piezoresistive Widerstände. Die piezoresistiven Widerstände sind insbesondere zu einem Netzwerk, wie zum Beispiel einer Halbbrücke, einer Vollbrücke, einem Spannungsteiler oder einer Wheatstoneschen Messbrücke, miteinander verschaltet. Bei der Verbiegung der Membran und den daraus resultierenden Verspannungen in den piezoresistiven Widerständen kommt es zu einer Veränderung der Widerstandswerte, die dann durch die Verschaltung ermittelt werden kann und in einen Wert für den auf die Membran wirkenden Druck umgerechnet werden kann.

Die piezoresistiven Widerstände sind dielektrisch voneinander und bevorzugt auch von dem Siliziumsubstrat isoliert. Die dielektrische Isolierung ist zum Beispiel zumindest teilweise durch die SiO₂-Schicht realisiert. Insbesondere sind also die piezoresistiven Widerstände nicht durch halbleitendes Material derart miteinander verbunden, dass bei hohen Temperaturen ein Stromfluss zwischen den Widerständen auftreten könnte. Anders ausgedrückt sind die piezoresistiven Widerstände nicht allein durch pn-Übergänge voneinander elektrisch isoliert.

In mindestens einer Ausführungsform umfasst der Sensor einen Verformungskörper mit einer Membran zur Verformung bei Druckeinwirkung durch ein Medium und ein auf die Membran aufgebrachtes und auf der Membran befestigtes Dehnungselement. Das Dehnungselement basiert auf SOI-Technologie und weist mehrere piezoresistive Widerstände auf.

Die vorliegende Erfindung basiert unter anderem auf der Idee, ein Dehnungselement auf Basis von SOI-Technologie auf einem Verformungskörper mit einer Membran anzuordnen. Bei der Verwendung eines Dehnungselements auf Basis von SOI-Technologie sind die piezoresistiven Widerstände dielektrisch voneinander isoliert. Dies erlaubt im Gegensatz zu pnisolierten piezoresistiven Widerständen die Verwendung auch bei hohen Temperaturen. Die Isolation zwischen den piezoresistiven Widerständen bleibt hier nämlich auch bei hohen Temperaturen erhalten und stabil. So kann der hier beschriebene Sensor beispielsweise bei Temperaturen von über 250 °C, beispielsweise bei 400 °C eingesetzt werden.

Der zu dem Dehnungselement separate Verformungskörper mit der Membran kann zudem so gewählt werden, dass er aggressiven Medien, wie zum Beispiel Abgasen oder einem Kraftstoff, standhält. Insbesondere wird der Sensor dann so verwendet, dass die Zuführung des Mediums von einer dem Dehnungselement abgewandten Seite erfolgt, so dass das Medium bevorzugt nicht mit dem Dehnungselement in Kontakt kommt.

Gemäß zumindest einer Ausführungsform sind die piezoresistiven Widerstände lateral freigestellte Si-Widerstände. Das heißt, die Widerstände sind in lateraler Richtung durch einen gasgefüllten Graben oder Zwischenraum voneinander beabstandet. Der Bereich zwischen je zwei Widerständen ist also nicht oder nicht vollständig mit festem Material aufgefüllt. Insbesondere stehen die piezoresistiven Widerstände in Richtung senkrecht zur Haupterstreckungsebene der Membran hervor. Die Widerstände umfassen oder bestehen beispielsweise aus p- oder n-dotiertem Silizium. Zwischen den Widerständen und dem Siliziumsubstrat ist bevorzugt die SiO₂-Schicht angeordnet, sodass die Si-Widerstände von der SiO2-Schicht gestützt sind.

Die piezoresistiven Widerstände umfassen jeweils einen räumlich freigestellten Si-Nanodraht (Si-Nanowire) oder bestehen daraus. Ein Aspektverhältnis der Nanodrähte beträgt beispielsweise jeweils zumindest 5 oder zumindest 10 oder zumindest 20. Die Si-Nanodrähte bestehen beispielsweise jeweils aus p- oder n-dotiertem Silizium. Die Längsachsen der Si-Nanodrähte erstrecken sich bevorzugt parallel zur Haupterstreckungsebene der Membran. "Räumlich freigestellt" bedeutet, dass die Si-Nanodrähte über einen Teil ihrer Länge nicht gestützt sondern unterhöhlt sind. Die SiOg-Schicht kann dazu im Bereich unterhalb der Nanodrähte entfernt sein, so dass die Nanodrähte in vertikaler Richtung frei schwingen können. Beispielsweise sind die Nanodrähte nur an ihren längsseitigen Enden gestützt und liegen dort beispielsweise auf der SiO₂-Schicht auf.

In nicht erfindungsgemäßen Ausführungen können die Nanodrähte auch nicht unterhöhlt sein und entlang ihrer gesamten Länge gestützt sein, zum Beispiel durch die SiO₂-Schicht.

Gemäß zumindest einer Ausführungsform ist ein Verbindungsmittel zwischen der Membran und dem Dehnungselement angeordnet. Über das Verbindungsmittel ist das Dehnungselement auf der Membran befestigt. Das Verbindungsmittel grenzt insbesondere auf einer Seite an die Membran und auf einer gegenüberliegenden Seite an das Siliziumsubstrat des Dehnungselements. Das Verbindungsmittel ist bevorzugt so gewählt, dass die Verbindung auch bei hohen Drücken auf der Membran, beispielsweise von mehr als 100 bar, und bei hohen Temperaturen, beispielsweise von mehr als 250 °C, stabil bleibt. Das Verbindungsmittel besteht beispielsweise aus anderen Materialien als das Dehnungselement und der Verformungskörper. Eine maximale und/oder mittlere Dicke des Verbindungsmittels, gemessen senkrecht zur Haupterstreckungsebene der Membran, beträgt zum Beispiel höchstens 20 µm, beispielsweise zwischen einschließlich 5 µm und 10 µm. Das Verbindungsmittel weist bevorzugt einen ähnlichen thermischen Ausdehnungskoeffizient wie die Membran auf. Zum Beispiel weichen die thermischen Ausdehnungskoeffizienten der Membran und des Verbindungsmittels um höchstens 10 % voneinander ab.

Gemäß zumindest einer Ausführungsform ist der E-Modul des Verbindungsmittels mindestens so groß wie der der Membran. Beispielsweise ist der E-Modul des Verbindungsmittels zumindest 5 % oder zumindest 10 % größer als der E-Modul der Membran. Durch die Verwendung eines solchen Verbindungsmittels wird erreicht, dass beim Verbiegen der Membran und der damit einhergehenden Verbiegung des Verbindungsmittels die Verbindung zwischen Membran und Dehnungselement nicht zerstört wird. Bei bestimmungsgemäß auftretenden Drücken findet eine Verformung des Verbindungsmittels bevorzugt im Hook'schen Bereich des Spannungs-Dehnungs-Diagramms des Elastizitätsmoduls statt.

Gemäß zumindest einer Ausführungsform umfasst oder besteht das Verbindungsmittel aus einem oder mehreren der folgenden Materialien: Glaslot, Metalllot, anorganischer Klebstoff, organischer Klebstoff. Zum Beispiel ist das Verbindungsmaterial ein Au-Sn-Lot. Solche Verbindungsmittel gewährleisten insbesondere eine stabile Verbindung auch bei hohen Drücken und Temperaturen. Insbesondere ist das Verbindungsmaterial aus einem solchen Material gebildet, dass dieses sich im bestimmungsgemäßen Betrieb, beispielswiese bei Drücken bis zu 1000 bar, nur reversibel verformt.

Gemäß zumindest einer Ausführungsform überdeckt das Dehnungselement einen Großteil der Membran. Beispielsweise überdeckt in Draufsicht betrachtet das Dehnungselement zumindest 50 % oder zumindest 75 % oder zumindest 90 % der Membran. Insbesondere überdeckt das Dehnungselement alle Bereiche der Membran, die nicht durch den Trägerkörper gestützt sind.

Gemäß zumindest einer Ausführungsform ist das Dehnungselement über einen Großteil seiner lateralen Ausdehnung mit der Membran verbunden. Die laterale Ausdehnung des Dehnungselements ist dabei dessen Ausdehnung parallel zur Haupterstreckungsebene der Membran. Beispielsweise ist das Dehnungselement entlang zumindest 75 % oder zumindest 90 % oder entlang seiner gesamten lateralen Ausdehnung mit der Membran verbunden und durch die Membran gestützt. Dabei kann das Dehnungselement unmittelbar mit der Membran verbunden sein oder mittelbar durch das Verbindungsmittel mit der Membran verbunden sein. Besonders bevorzugt ist zwischen dem Dehnungselement und der Membran kein gasgefüllter Hohlraum ausgebildet, in dem das Dehnungselement nicht durch die Membran gestützt ist.

Gemäß zumindest einer Ausführungsform weist das Dehnungselement eine maximale Dicke von höchstens 200 µm oder höchstens 150 µm oder höchstens 100 µm auf. Alternativ oder zusätzlich beträgt die maximale Dicke des Dehnungselements zumindest 10 µm oder zumindest 20 µm. Die Dicke wird auch hier senkrecht zur Haupterstreckungsebene des Dehnungselements gemessen. Um eine geringe Dicke des Dehnungselements zu erreichen, kann das Siliziumsubstrat gegenüber seiner anfänglichen Dicke, die es im Waferverbund hat, gedünnt sein, beispielsweise durch Schleifen.

Gemäß zumindest einer Ausführungsform umfasst oder besteht der Verformungskörper, insbesondere die Membran, aus einem oder mehreren der folgenden Materialien: Glas, Saphir, Silizium, Stahl, wie zum Beispiel Edelstahl, Keramik, wie zum Beispiel ZrO₂ oder Al₂O₃. Insbesondere ist die Membran aus einem solchen Material gebildet, dass diese sich im bestimmungsgemäßen Betrieb, beispielswiese bei Drücken bis zu 1000 bar, nur reversibel verformt.

Gemäß zumindest einer Ausführungsform sind die piezoresistiven Widerstände in einem Randbereich der Membran angeordnet. Bevorzugt sind die piezoresistiven Widerstände dabei in einem Bereich der Membran angeordnet, der nicht von dem Trägerkörper gestützt ist, der aber unmittelbar an den Trägerkörper angrenzt. Insbesondere sind die piezoresistiven Widerstände in dem Bereich der Membran angeordnet, in dem die Membran und damit das Dehnungselement bei einer Druckeinwirkung die größte Biegespannung erfährt. Dass die piezoresistiven Widerstände in einem Bereich der Membran angeordnet sind meint, dass die piezoresistiven Widerstände in Draufsicht betrachtet mit diesem Bereich überlappen.

Als nächstes wird das Verfahren zur Herstellung eines Sensors angegeben. Das Verfahren eignet sich insbesondere zur Herstellung eines hier beschriebenen Sensors. Alle im Zusammenhang mit dem Sensor offenbarten Merkmale sind daher auch für das Verfahren offenbart und umgekehrt.

Gemäß zumindest einer Ausführungsform umfasst das Verfahren einen Schritt A), in dem ein Verformungskörper mit einer Membran zur Verformung bei Druckeinwirkung durch ein Medium bereitgestellt wird. Ferner umfasst das Verfahren einen Schritt B), in dem ein Dehnungselement bereitgestellt wird, wobei das Dehnungselement auf SiOg-Technologie basiert und mehrere piezoresistive Widerstände aufweist. In einem Schritt C) wird das Dehnungselement dann auf der Membran aufgebracht und befestigt.

Das Dehnungselement wird beispielsweise aus einem Waferverbund gefertigt, der ein Siliziumsubstrat, eine Siliziumschicht und eine zwischen der Siliziumschicht und dem Siliziumsubstrat angeordnete Siliziumdioxidschicht (SiO₂-Schicht) umfasst. Die piezoresistiven Widerstände werden dann aus der Siliziumschicht gefertigt, beispielsweise durch Ätzen. Anschließend kann das Siliziumsubstrat auf eine gewünschte Dicke, beispielsweise durch Schleifen, gedünnt werden.

Gemäß zumindest einer Ausführungsform wird das Dehnungselement über ein Direktbondverfahren auf der Membran befestigt. Beispielsweise wird dabei das Siliziumsubstrat des Dehnungselements in direkten Kontakt mit der Membran, die beispielsweise aus Keramik gebildet ist, gebracht.

Gemäß zumindest einer Ausführungsform wird das Dehnungselement über ein Verbindungsmittel auf der Membran befestigt.

Weitere Vorteile und vorteilhafte Ausgestaltungen und Weiterbildungen des Sensors und des Verfahrens zur Herstellung eines Sensors ergeben sich aus den folgenden in Zusammenhang mit den Figuren dargestellten Ausführungsbeispielen. Gleiche, gleichartige oder gleichwirkende Elemente sind in den Figuren mit den gleichen Bezugszeichen versehen. Die Figuren und die Größenverhältnisse der in den Figuren dargestellten Elemente untereinander sind nicht als maßstäblich zu betrachten. Vielmehr können einzelne Elemente, insbesondere Schichtdicken, zur besseren Darstellbarkeit und/oder für eine bessere Verständlichkeit übertrieben groß dargestellt sein.

Es zeigen:
Figuren 1 und 2 Ausführungsbeispiele des Sensors jeweils in Querschnittsansicht,
Figuren 3 und 4 ein Ausführungsbeispiel des Sensors in Querschnittsansicht und in Draufsicht,
Figur 5 eine Position in einem Ausführungsbeispiel des Verfahrens zur Herstellung des Sensors.

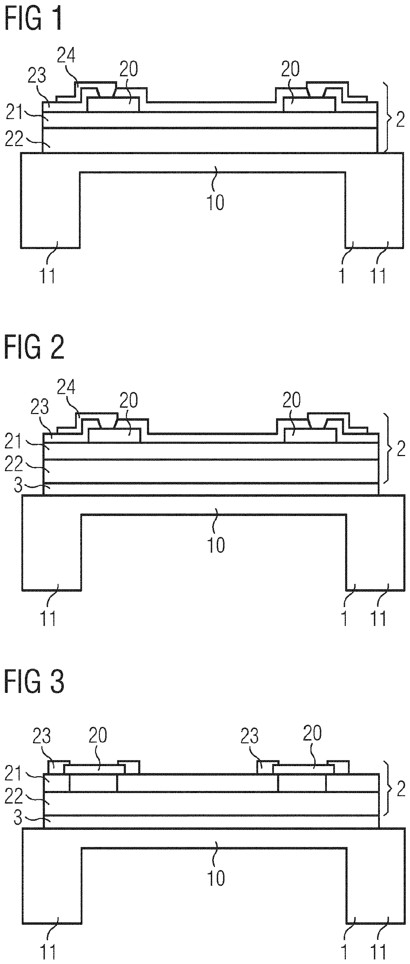

Figur 1 zeigt ein erstes Ausführungsbeispiel des Sensors in einer Querschnittsansicht. Der Sensor umfasst einen Verformungskörper 1 mit einer Membran 10 und einem Trägerkörper 11. Die Membran 10 ist in Randbereichen durch den Trägerkörper 11 gestützt. In einem inneren Bereich der Membran 10 ist diese nicht durch den Trägerkörper 11 gestützt und ist dort frei schwingbar oder frei biegbar gegenüber dem Trägerkörper 11. Vorliegend sind die Membran 10 und der Trägerkörper 11 einstückig ausgebildet, und bestehen zum Beispiel aus Keramik. Es ist aber auch möglich, dass der Trägerkörper 11 und die Membran 10 nicht einstückig miteinander ausgebildet sind und zum Beispiel aus unterschiedlichen Materialien bestehen.

Auf einer dem Trägerkörper 11 abgewandten Seite der Membran 10 ist ein Dehnungselement 2 angeordnet. Das Dehnungselement 2 ist ein Halbleiterchip auf Basis von SOI-Technologie. Das Dehnungselement 2 umfasst ein Siliziumsubstrat 22 und eine SiO₂-Schicht 21 auf dem Siliziumsubstrat 22. Auf einer dem Siliziumsubstrat 22 abgewandten Seite der SiO₂-Schicht 21 sind lateral freigestellte, piezoresistive Widerstände 20 aus Silizium angeordnet. Die piezoresistiven Widerstände 20 sind durch die SiO₂-Schicht elektrisch voneinander und auch von dem Siliziumsubstrat 22 isoliert. Auf einer dem Siliziumsubstrat 22 abgewandten Seite sind die piezoresistiven Widerstände 20 durch eine Passivierungsschicht 23, beispielsweise aus Siliziumnitrid, passiviert. Über metallische Leiterbahnen 24 sind die piezoresistiven Widerstände 20 elektrisch kontaktiert.

Im Betrieb des Sensors wird zum Beispiel die dem Dehnungselement 2 abgewandte Seite der Membran 10 mit einem Medium, beispielsweise einer Flüssigkeit, wie Öl oder Wasser, in Kontakt gebracht. Durch den durch das Medium auf die Membran 10 ausgeübten Druck verbiegt sich die Membran 10. Dadurch wird auch das Dehnungselement 2 verbogen und die piezoresistiven Widerstände 20 werden verspannt. Durch diese Verspannung ändert sich der Widerstandswert der piezoresistiven Widerstände 20, was über die Kontaktierung durch die Leiterbahnen 24 messbar ist. Vorliegend sind die piezoresistiven Widerstände 20 beispielsweise zu einer Wheatstoneschen Messbrücke verschaltet.

In der Figur 1 ist das Dehnungselement 2 direkt auf die Membran 10 aufgebracht, derart dass das Siliziumsubstrat 22 in direktem Kontakt zur Membran 10 steht. Zum Beispiel ist das Dehnungselement 2 über Direktbonden auf die Membran 10 aufgebracht. Das Dehnungselement 2 überdeckt die Membran 10, insbesondere den nicht gestützten Teil der Membran 10, vollständig. Dabei ist das Dehnungselement 2 entlang der gesamten lateralen Ausdehnung des Dehnungselements 2 mit der Membran 10 direkt verbunden.

Figur 2 zeigt ein zweites Ausführungsbeispiel des Sensors. Das Dehnungselement 2 ist hier genauso aufgebaut wie in der Figur 1. Anders als in der Figur 1 ist das Dehnungselement 2 aber über ein Verbindungsmittel 3 auf der Membran 10 aufgebracht und über dieses mit der Membran 10 verbunden. Bei dem Verbindungsmittel 3 handelt es sich beispielsweise um ein Glaslot oder ein Metalllot oder einen organischen Klebstoff oder einen anorganischen Klebstoff. Der E-Modul des Verbindungsmittels 3 ist bevorzugt zumindest so groß wie das der Membran 10. Vorliegend besteht die Membran 10 beispielsweise aus Edelstahl.

Figur 3 zeigt ein drittes Ausführungsbeispiel des Sensors in Querschnittsansicht. Hier umfassen die piezoresistiven Widerstände 20 jeweils einen Nanodraht (Nanowire) aus Silizium. Die Nanodrähte sind räumlich freigestellt derart, dass die Nanodrähte zumindest in Bereichen nicht gestützt und frei über dem Siliziumsubstrat 22 hängen. Die SiO₂-Schicht ist also im Bereich unterhalb der Nanodrähte bereichsweise entfernt, so dass dort die Nanodrähte nicht von der SiO₂-Schicht gestützt sind. Wie in dem zweiten Ausführungsbeispiel ist hier das Dehnungselement 2 wieder mithilfe eines Verbindungsmittels 3 an der Membran 10 befestigt.

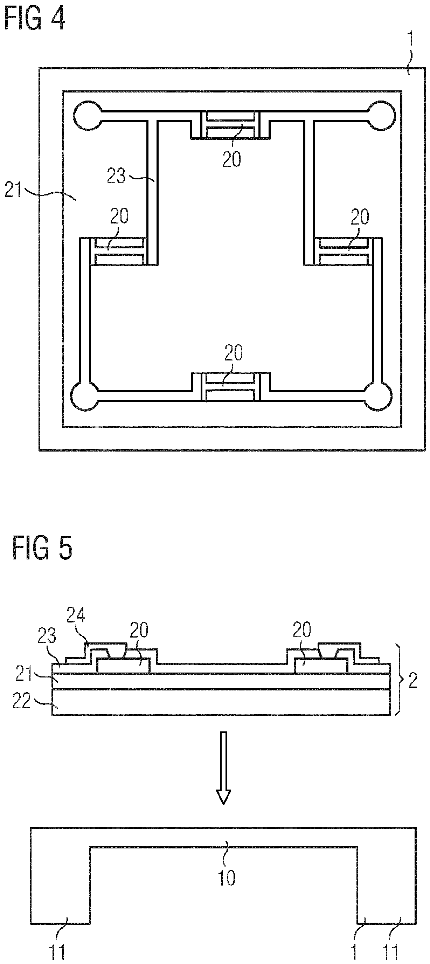

Figur 4 zeigt eine Draufsicht auf das dritte Ausführungsbeispiel des Sensors. Zu erkennen ist, dass das Dehnungselement 2 vier piezoresistive Widerstände 20 jeweils mit einem Nanodraht umfasst. Die piezoresistiven Widerstände 20 sind über metallische Leiterbahnen 23 miteinander zu einer Wheatstonschen Messbrücke verschaltet.

Figur 5 zeigt eine Position in einem Ausführungsbeispiel des Verfahrens zur Herstellung eines Sensors. Hier sind ein Dehnungselement 2 auf Basis von SOI-Technologie mit mehreren piezoresistiven Widerständen 20 sowie ein Verformungskörper 1 mit einer Membran 10 bereitgestellt. Das Dehnungselement 2 wird auf die Membran 10 aufgebracht und auf dieser befestigt. Hier ist der Fall gezeigt, bei dem das Dehnungselement 2 unmittelbar, beispielsweise durch Direktbonden, auf die Membran 10 aufgebracht wird. Alternativ könnte das Dehnungselement 2 mithilfe eines Verbindungsmittels auf der Membran 10 befestigt werden.

Die Erfindung ist nicht durch die Beschreibung anhand der Ausführungsbeispiele auf diese beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn diese Merkmale oder diese Kombination selbst nicht explizit in den Patentansprüchen oder Ausführungsbeispielen angegeben sind.

### Bezugszeichenliste

- 1: Verformungskörper
- 2: Dehnungselement
- 3: Verbindungsmittel
- 10: Membran
- 11: Trägerkörper
- 20: piezoresistiver Widerstand
- 21: SiO₂-Schicht
- 22: Siliziumsubstrat
- 23: Passivierungsschicht
- 24: Leiterbahn

## Patentansprüche

1. Sensor umfassend
- einen Verformungskörper (1) mit einer Membran (10) zur Verformung bei Druckeinwirkung durch ein Medium,
- ein auf die Membran (10) aufgebrachtes und auf der Membran (10) befestigtes Dehnungselement (2), wobei
- das Dehnungselement (2) auf SOI-Technologie basiert und ein Siliziumsubstrat (22), eine Siliziumdioxidschicht (21) und mehrere piezoresistive Widerstände (20) aufweist,
**dadurch gekennzeichnet, dass** die piezoresistiven Widerstände (20) jeweils einen räumlich freigestellten Si-Nanodraht umfassen, wobei räumlich freigestellt bedeutet, dass die Si-Nanodrähte über einen Teil ihrer Länge nicht gestützt, sondern unterhöhlt sind.

2. Sensor nach Anspruch 1,
wobei die piezoresistiven Widerstände (20) lateral freigestellte Si-Widerstände sind.

3. Sensor nach einem der vorhergehenden Ansprüche, wobei
- ein Verbindungsmittel (3) zwischen der Membran (10) und dem Dehnungselement (2) angeordnet ist,
- das Dehnungselement (2) über das Verbindungsmittel (3) auf der Membran (10) befestigt ist.

4. Sensor nach Anspruch 3,
wobei der E-Modul des Verbindungsmittels (3) mindestens so groß wie der der Membran (10) ist.

5. Sensor nach Anspruch 3 oder 4,
wobei das Verbindungsmittel (3) ein Glaslot oder ein Metalllot oder einen anorganischen Klebstoff oder einen organischen Klebstoff umfasst.

6. Sensor nach einem der vorhergehenden Ansprüche,
wobei das Dehnungselement (2) einen Großteil der Membran (10) überdeckt.

7. Sensor nach einem der vorhergehenden Ansprüche,
wobei das Dehnungselements (2) über einen Großteil seiner lateralen Ausdehnung mit der Membran (10) verbunden ist.

8. Sensor nach einem der vorhergehenden Ansprüche,
wobei das Dehnungselement (2) eine maximale Dicke von höchstens 200 µm aufweist.

9. Sensor nach einem der vorhergehenden Ansprüche,
wobei der Verformungskörper (1) eines oder mehrere der folgenden Materialien umfasst oder daraus besteht:
Glas, Saphir, Silizium, Stahl, Keramik.

10. Sensor nach einem der vorhergehenden Ansprüche,
wobei die piezoresistiven Widerstände (21) in einem Randbereich der Membran (10) angeordnet sind.

11. Verfahren zur Herstellung eines Sensors, umfassend die Schritte:
A) Bereitstellen eines Verformungskörpers (1) mit einer Membran (10) zur Verformung bei Druckeinwirkung durch ein Medium,
B) Bereitstellen eines Dehnungselements (2), wobei das Dehnungselement (2) auf SOI-Technologie basiert und ein Siliziumsubstrat (22), eine Siliziumdioxidschicht (21) und mehrere piezoresistive Widerstände (20) aufweist,
wobei die piezoresistiven Widerstände (20) jeweils einen räumlich freigestellten Si-Nanodraht umfassen, wobei räumlich freigestellt bedeutet, dass die Si-Nanodrähte über einen Teil ihrer Länge nicht gestützt, sondern unterhöhlt sind,
C) Aufbringen und Befestigen des Dehnungselements (2) auf der Membran (10).

12. Verfahren nach Anspruch 11,
wobei das Dehnungselement (2) über ein Direktbondverfahren auf der Membran (10) befestigt wird.

13. Verfahren nach Anspruch 11,
wobei das Dehnungselement (2) über ein Verbindungsmittel (3) auf der Membran (10) befestigt wird.

## Claims

1. Sensor comprising
- a deformation body (1) having a diaphragm (10) for deformation when subjected to pressure by a medium,
- a strain element (2) applied to the diaphragm (10) and secured on the diaphragm (10), wherein
- the strain element (2) is based on SOI technology and has a silicon substrate (22), a silicon dioxide layer (21) and a plurality of piezoresistive resistors (20),
**characterized in that** the piezoresistive resistors (20) each comprise a spatially freed Si nanowire, wherein spatially freed means that the Si nanowires are undercut rather than supported over part of their length.

2. Sensor according to Claim 1,
wherein the piezoresistive resistors (20) are laterally freed Si resistors.

3. Sensor according to either of the preceding claims,
wherein
- a connecting means (3) is arranged between the diaphragm (10) and the strain element (2),
- the strain element (2) is secured on the diaphragm (10) via the connecting means (3).

4. Sensor according to Claim 3,
wherein the modulus of elasticity of the connecting means (3) is at least equal to that of the diaphragm (10).

5. Sensor according to Claim 3 or 4,
wherein the connecting means (3) comprises a glass solder or a metal solder or an inorganic adhesive or an organic adhesive.

6. Sensor according to any of the preceding claims,
wherein the strain element (2) covers a large portion of the diaphragm (10).

7. Sensor according to any of the preceding claims,
wherein the strain element (2) is connected to the diaphragm (10) over a large portion of its lateral extent.

8. Sensor according to any of the preceding claims,
wherein the strain element (2) has a maximum thickness of at most 200 µm.

9. Sensor according to any of the preceding claims,
wherein the deformation body (1) comprises or consists of one or more of the following materials:
glass, sapphire, silicon, steel, ceramic.

10. Sensor according to any of the preceding claims,
wherein the piezoresistive resistors (21) are arranged in an edge region of the diaphragm (10).

11. Method for producing a sensor, comprising the steps:
A) providing a deformation body (1) having a diaphragm (10) for deformation when subjected to pressure by a medium,
B) providing a strain element (2), wherein the strain element (2) is based on SOI technology and has a silicon substrate (22), a silicon dioxide layer (21) and a plurality of piezoresistive resistors (20), wherein the piezoresistive resistors (20) each comprise a spatially freed Si nanowire, wherein spatially freed means that the Si nanowires are undercut rather than supported over part of their length,
C) applying and securing the strain element (2) on the diaphragm (10).

12. Method according to Claim 11,
wherein the strain element (2) is secured on the diaphragm (10) via a direct bonding method.

13. Method according to Claim 11,
wherein the strain element (2) is secured on the diaphragm (10) via a connecting means (3).

## Revendications

1. Capteur comprenant
- un corps de déformation (1) pourvu d'une membrane (10) destinée à se déformer lorsqu'une pression est exercée par un milieu,
- un élément d'expansion (2) appliqué sur la membrane (10) et fixé à la membrane (10),
- l'élément d'expansion (2) étant basé sur la technologie SOI et comportant un substrat de silicium (22), une couche de dioxyde de silicium (21) et plusieurs résistances piézo-résistives (20),
**caractérisé en ce que**
les résistances piézo-résistives (20) comprennent chacune un nano-fil de Si spatialement exposé, spatialement exposé signifiant que les nano-fils de Si ne sont pas supportés, mais sont dégagés en dessous, sur une partie de leur longueur.

2. Capteur selon la revendication 1,
les résistances piézo-résistives (20) étant des résistances en Si exposées latéralement.

3. Capteur selon l'une des revendications précédentes,
- un moyen de liaison (3) étant disposé entre la membrane (10) et l'élément d'expansion (2),
- l'élément d'expansion (2) étant fixé à la membrane (10) par le biais du moyen de liaison (3).

4. Capteur selon la revendication 3,
le module d'élasticité du moyen de liaison (3) étant au moins aussi grand que celui de la membrane (10).

5. Capteur selon la revendication 3 ou 4,
le moyen de liaison (3) comprenant une soudure de verre ou une soudure métallique ou un adhésif minéral ou un adhésif organique.

6. Capteur selon l'une des revendications précédentes,
l'élément d'expansion (2) recouvrant une grande partie de la membrane (10).

7. Capteur selon l'une des revendications précédentes,
l'élément d'expansion (2) étant relié à la membrane (10) sur une grande partie de son extension latérale.

8. Capteur selon l'une des revendications précédentes,
l'élément d'expansion (2) ayant une épaisseur maximale d'au plus 200 µm.

9. Capteur selon l'une des revendications précédentes,
le corps de déformation (1) comprenant ou étant en une ou plusieurs des matières suivantes : verre, saphir, silicium, acier, céramique.

10. Capteur selon l'une des revendications précédentes,
les résistances piézo-résistives (21) étant disposées dans une zone de bord de la membrane (10).

11. Procédé de réalisation d'un capteur, ledit procédé comprenant les étapes suivantes :
A) fournir un corps de déformation (1) pourvu d'une membrane (10) destinée à se déformer lorsqu'une pression est exercée par un milieu,
B) fournir un élément d'expansion (2), l'élément d'expansion (2) étant basé sur la technologie SOI et comportant un substrat de silicium (22), une couche de dioxyde de silicium (21) et plusieurs résistances piézo-résistives (20),
les résistances piézo-résistives (20) comprenant chacune un nano-fil de Si spatialement exposé, spatialement exposé signifiant que les nano-fils de Si ne sont pas supportés, mais sont dégagés en dessous, sur une partie de leur longueur,
C) appliquer et fixer l'élément d'expansion (2) sur la membrane (10).

12. Procédé selon la revendication 11,
l'élément d'expansion (2) étant fixé sur la membrane (10) par le biais d'un procédé de liaison directe.

13. Procédé selon la revendication 11,
l'élément d'expansion (2) étant fixé sur la membrane (10) par le biais d'un moyen de liaison (3).
